# EUROPÄISCHE PATENTSCHRIFT

(11) **EP 1 836 403 B1**
(45) Veröffentlichungstag und Bekanntmachung des Hinweises auf die Patenterteilung: **20.04.2011**
(21) Anmeldenummer: 05819381.4
(22) Anmeldetag: 10.11.2005
(51) Int. Cl.: F16C 11/04, F16C 23/04, F16C 7/08

(54) **GLEITLAGERANORDNUNG**
SLIDING BEARING ARRANGEMENT
ARRANGEMENT DE PALIER LISSE

(30) Priorität: 18.12.2004 DE 102004061097
(43) Veröffentlichungstag der Anmeldung: 26.09.2007
(73) Patentinhaber: Schaeffler Technologies GmbH & Co. KG, 91074 Herzogenaurach (DE)
(72) Erfinder: SINGER, Johann, 91091 Grossenseebach (DE); DOLIWA, Stefan, 90518 Waldspitze (DE)
(86) Internationale Anmeldenummer: PCT/EP2005/012025
(87) Internationale Veröffentlichungsnummer: WO 2006/063638

(56) Entgegenhaltungen:
- DE-A1- 3 144 720
- DE-A1- 3 921 975
- GB-A- 1 380 947
- GB-A- 2 269 212
- PATENT ABSTRACTS OF JAPAN Bd. 1999, Nr. 13, 30. November 1999 (1999-11-30) -& JP 11 230160 A (ASMO CO LTD), 27. August 1999 (1999-08-27)
- PATENT ABSTRACTS OF JAPAN Bd. 2002, Nr. 09, 4. September 2002 (2002-09-04) -& JP 2002 130403 A (KOYO SEIKO CO LTD), 9. Mai 2002 (2002-05-09)

## Beschreibung

### Gebiet der Erfindung

Die Erfindung betrifft eine Gleitlageranordnung mit einem Bolzen und mindestens einer Lagerhülse zur Aufnahme des Bolzens, wobei der Bolzen eine senkrecht zur Bolzen-Lagerhülseneinheit einwirkende außermittige Kraft aufnimmt, und wobei die mindestens eine Lagerhülse zylindrisch sowie der Bolzen von vorbestimmten Positionen aus jeweils zum axialen Ende hin verlaufend verjüngend ausgebildet ist.

### Hintergrund der Erfindung

Es ist an sich bekannt, eine axiale Einheit aus einem Bolzen und mindestens einer Lagerhülse zur radialen Aufnahme des Bolzens auszubilden, wobei der Bolzen und die Lagerhülse einander zugeordnete Gleitlagergegenlaufpartner bilden. Der Bolzen kann dabei eine senkrecht zur Bolzen-Lagerhülseneinheit (Gleitlager) einwirkende Kraft aufnehmen, welche mittig oder außermittig auf den Bolzen einwirkt.

Insbesondere bei handelsüblichen Riemenspannsystemen ist eine Befestigungseinheit aus einer derartigen Bolzen-Lagerhülseneinheit üblich. Riemenspannsysteme werden beispielsweise im Steuertrieb oder Aggregattrieb von Fahrzeugen mit Verbrennungsmotor eingesetzt.

Aus dem Stand der Technik sind Riemenspannsysteme mit in Bezug auf die Bolzen-Lagerhülseneinheit außermittig angeordneter Spannrolle bekannt, welche über ein auβermittig angeordnetes Wälzlager drehgelagert ist. Es hat sich in der Vergangenheit gezeigt, dass bei einer Bolzen-Lagerhülseneinheit von Riemenspannsystemen mit außermittig angeordneter Spannrolle eine erhöhte Flächenpressung zwischen Bolzen und Lagerhülse auftritt. Diese verursacht eine erhöhte mechanische Kantenbelastung sowohl beim Bolzen als auch bei der Lagerhülse mit der Folge, dass die Lebensdauer dieses Gleitlagers reduziert werden kann. Besonders bei hohen außermittig einwirkenden Kräften und bei langer Betriebsdauer führt dies zu einer unsymmetrischen Auslenkung und instabilen Lagerung, so dass insgesamt die Führung des Riemenspannsystems für einen störungsfreien Betrieb nur unzureichend ist.

Vor diesem Hintergrund offenbart die DE 195 33 457 A1 eine Spannvorrichtung für einen Zugmitteltrieb mit einem durch eine Druckfeder belasteten, längsverschiebbar geführten Kolben zur Ausübung einer linearen Kraft auf den zu spannenden Zugmitteltrieb. Bei der offenbarten Spannvorrichtung wirken auf die Lagerung nur mittig einwirkende Kräfte.

Aus der DE 102 36 113 B3 ist dagegen eine Drehlagerung mit einem Gleitlager bekannt, welches einen feststehenden Keramikkörper mit einer Lagerfläche aufweist. Der verwendete Keramikwerkstoff besitzt eine hohe Verschleißresistenz und kann auch bei hohen außermittig einwirkenden Kräften und hohen Temperaturen (z.B. durch Reibung) eine zuverlässige und langlebige Drehlagerung bereitstellen.

Nachteilig hieran ist, dass der Keramikkörper nur unter hohem Aufwand in eine zur Aufnahme des Keramikkörpers bereitgestellte Gleitlagerhülse (Buchse) eingesetzt werden kann, da dass Material aufgrund seiner Formbeständigkeit schwierig und unter hohem Zeitaufwand einzusetzen ist. Bei erhöhter Presskraft kann der Keramikkörper aufgrund seiner spröden Materialeigenschaft zerstört werden. Nur durch aufwendiges und zeitraubendes Erwärmen der Gleitlagerhülse kann der Keramikkörper eingesetzt werden. Somit erweist sich diese Drehlagerung als aufwendig in der Montage und teuer.

Zudem offenbart diese Druckschrift keine Lösung, wie Abnutzungserscheinungen, die den Bolzen betreffen (der Bolzen bei einer Spannvorrichtung ist nicht aus Keramik, sondern beispielsweise aus gehärtetem Stahl), gelöst werden können. Somit ist insgesamt auch hier die Lebensdauer des bekannten Gleitlagers vergleichsweise gering. Zudem hat ein Kalibrieren oder Einschränken der Toleranzen ebenfalls negative Auswirkungen auf Kosten und Lebensdauer.

Außerdem ist aus der US 6,552,455 B1 eine Gleitlagerung für einen Lagerbolzen bekannt, der in der Mitte der Lagerung eine zylindrische und seitlich davon eine konische Mantelfläche aufweist, wobei der Übergang von dem mittleren Abschnitt des Lagerbolzens zu seinen konischen Abschnitten gestuft verläuft.

Einen ähnlichen Aufbau zeigt die aus der DE 600 35 451 T2 bekannte Gleitlageranordnung, bei welcher der Lagerbolzen im Bereich der Gleitlagerung jedoch mehrere Abschnitte mit unterschiedlicher konvexer Wölbung aufweist, die jeweils rechts- und linksseitig von der Mitte des Lagerbolzens unterschiedlich weit entfernt ausgebildet sind.

Außerdem ist aus der DE 39 21 975 A1 eine Taumellagerung für eine Trommelbremse bekannt, mit einer zylindrischen Gleitlagerhülse sowie einem Lagerbolzen, der einen kurzen axialen Abschnitt mit einer ballig konvexen Geometrie sowie einen axial längeren Abschnitt mit einem sich kegelig verjüngenden Abschnitt aufweist.

Die JP 11 230 160A zeigt dagegen eine Gleitlageranordnung mit einem zylindrischen Lagerbolzen, der in einem axialen Aufnahmebereich eines Lagergehäuses angeordnete ist, dessen Durchmesser sich von der Mitte der Lagerung zu den axialen Enden hin vergrößert. Schließlich ist aus der JP 2002 130 403 A eine Riemenspannvorrichtung für einen Umschlingungstrieb bekannt, bei der eine hohlzylindrische Lagernabe auf zwei axial hintereinander angeordneten Gleitlagerhülsen angeordnet ist.

### Aufgabe der Erfindung

Der Erfindung liegt die Aufgabe zugrunde, aufzuzeigen, wie auf einfache Weise und mit geringem konstruktivem Aufwand eine Erhöhung der Lebensdauer eines Gleitlagers erzielt werden kann, bei gleichzeitiger Beibehaltung von gegenwärtigen Einbauvorschriften. Eine weitere Aufgabe besteht darin, die Einsatzgrenzen eines konventionellen Gleitlagers zu erweitern, und zwar unter gleichzeitiger Beibehaltung der für eine Großserienfertigung notwendigen Toleranzen für einen Bolzendurchmesser, Gehäusedurchmesser und für eine Gleitlagerwanddicke.

### Zusammenfassung der Erfindung

Die Lösung dieser Aufgaben ergibt sich aus den Merkmalen des Hauptanspruchs, während der einzige Unteranspruch eine vorteilhafte Weiterbildung definiert.

Demnach betrifft die Erfindung gemäß Anspruch 1 eine Gleitlageranordnung mit einem Bolzen und mindestens einer Lagerhülse zur Aufnahme des Bolzens, wobei der Bolzen eine senkrecht zur Bolzen-Lagerhülseneinheit einwirkende außermittige Kraft aufnimmt, und wobei die mindestens eine Lagerhülse zylindrisch sowie der Bolzen von vorbestimmten Positionen aus jeweils zum axialen Ende hin verlaufend verjüngend ausgebildet ist. Zur Lösung der gestellten Aufgabe ist vorgesehen, dass die der mindestens einen Lagerhülse zugewandte Mantelfläche des Bolzens in Bezug auf dessen Längsachse und symmetrisch zum axialen Mittelpunkt des Bolzens jeweils einem Radius folgend ballig ausgebildet ist.

Durch eine derartige Endprofilierung wird die Kontaktfläche zwischen Bolzen und Lagerhülse insbesondere bei einer außermittigen Krafteinwirkung vorteilhaft groß gehalten, so dass die Flächenpressung in der Bolzen-Lagerhülseneinheit erheblich reduziert und die Lebensdauer des Gleitlagers erhöht wird.

Die Lagerung von diesbezüglich ausgebildeten Spanneinheiten besteht aus einem Stahlbolzen und einem wartungsfreien Mehrkomponenten-Gleitlager-Paar, die beispielsweise in einer Aufnahmebohrung im Hebel oder in einer Grundplatte der Spanneinheit eingepresst sind. Gemäß einem konkreten Beispiel soll der Fluchtungsfehler zwischen den Gleitpartner beziehungsweise deren Radialspiel maximal 20 µm betragen. Die Flächenpressung in diesem Gleitlager berechnet sich dabei aus der einwirkenden Kraft und der von der Kraft beaufschlagten projizierten Fläche. Durch die deutliche Vergrößerung dieser lasttragenden Fläche, einhergehend mit einer Verringerung der Flächenpressung, werden Verschleißerscheinungen erheblich reduziert, wodurch sich die Lebensdauer des Gleitlagers erhöht.

Vorteilhaft ist zudem, dass zur Herstellung von Bolzen und Lagerhülse auf kostengünstige Materialien zurückgegriffen werden kann, und dass zum Aufbau des Gleitlagers herkömmlich bekannte Herstellungsschritte nutzbar sind. Somit wird die Lebensdauer des Gleitlagers bei konstant bleibenden Herstellkosten erhöht. Zudem werden gegenwärtige Einbauvorschriften eingehalten und die Einsatzgrenzen der Gleitlagerung unter Beibehaltung der für eine Großserienfertigung notwendigen Toleranzen der Elemente erweitert.

Die Verjüngung des Bolzens ist radial ausgebildet. Durch diese "ballige" Form der Verjüngung des Bolzens wird die Flächenpressung unabhängig von Stärke und Richtung der außermittig ansetzenden Kraft reduziert. Der Radius der Balligkeit kann dabei in Abhängigkeit von unterschiedlichen Anwendungsfeldern individuell gewählt werden.

Die genannten vorbestimmten Positionen sind auch symmetrisch zum axialen Mittelpunkt des Bolzens angeordnet. Eine derartige Ausbildung des Bolzens ermöglicht beidseitig eine gleichmäßig reduzierte Flächenpressung, sowohl auf der linken als auch auf der rechten Seite des Gleitlagers. Zudem ist ein symmetrisch ausgebildeter Bolzen günstig herzustellen.

In einer vorteilhaften Ausgestaltung ist der Bolzen in zwei Lagerhülsen gelagert. Durch diese Ausgestaltung erfolgt die Lagerung bei einer ausreichenden Lagerfläche und einem zugleich lang ausgebildeten Lagerbereich, wodurch ein hohes, durch eine außermittig angesetzte Kraft ausgeübtes Drehmoment aufgenommen werden kann. Zudem werden axiale Reibungskräfte reduziert. Im Allgemeinen werden somit Material- und Herstellungskosten reduziert.

Vorzugsweise enthält die mindestens eine Lagerhülse an der Innenseite eine Gleitbeschichtung aus Bronze-PTFE. Bronze-PTFE verfügt über gute Gleit- und Verschleißeigenschaften bei guter Wärmeleitfähigkeit und geringem Kältefluss. Im Maschinenbau wird Bronze-PTFE vorzugsweise bei Gleitauflagen an Schlittenführungen und beispielsweise auch bei Gleitlagern verwendet.

### Kurze Beschreibung der Zeichnungen

Die Erfindung lässt sich anhand eines Ausführungsbeispiels weiter erläutern. Dazu ist der Beschreibung eine Zeichnung beigefügt. In dieser zeigt
- Figur 1: eine Endprofilierung einer Bolzen-Lagerhülseneinheit gemäß der vorliegenden Erfindung,
- Figur 2: eine Endprofilierung einer Bolzen-Lagerhülseneinheit gemäß dem Stand der Technik,
- Figur 3: eine Flächenpressungsverteilung an paarweise verbauten Gleitlagern und
- Figur 4: einen Querschnitt durch ein Riemenspannsystem.

### Detaillierte Beschreibung der Zeichnungen

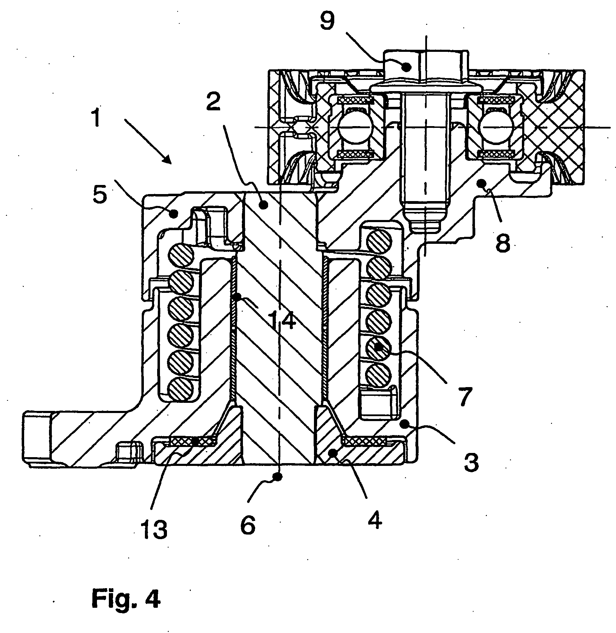

Demnach zeigt Figur 4 einen Querschnitt durch ein Riemenspannsystem 1 mit einer außermittig angeordneten Spannrolle. Das Riemenspannsystem 1 enthält ein unteres Zylindergehäuse 3 und ein oberes Zylindergehäuse 5, welche einen weitgehend gleichen Außen- und Innendurchmesser aufweisen. Die Zylindergehäuse 3 und 5 sind axial derart zusammengesetzt, dass diese um die Längsachse 6 gegeneinander verdreht werden können. Das obere Zylindergehäuse 5 umfasst einen seitlich angesetzten Hebel 8, an welchem die Spannrolle mittels einer Schraube 9 befestigt ist.

Die radial innere Mantelfläche des oberen Zylindergehäuses 5 ist mit einem axialen Ende eines hohlen Bolzens 2 drehfest verbunden. An seinem anderen Ende trägt der Bolzen 2 zudem eine drehfeste Scheibe 4, an deren zum unteren Zylindergehäuse 3 weisenden Kreisfläche ein Reibbelag 13 angeordnet ist, welcher bei einer Drehbewegung vom oberen Zylindergehäuse 5, Bolzen 2 und Scheibe 4 gegenüber dem unteren Zylindergehäuse 3 gegebenenfalls aus dem Zugmittel eingekoppelte Schwingungen dämpft. Selbstverständlich kann der Bolzen 2 auch ohne Bohrung ausgebildet sein.

Zur Auslenkung des oberen Zylindergehäuses 5 gegen das untere Zylindergehäuse 3, und damit zur Anpressung einer Spannrolle gegen ein Zugmittel eines Zugmitteltriebes, ist innerhalb der beiden Zylindergehäuse 3 und 5 eine Schraubenfeder 7 angeordnet, welche auf das obere Zylindergehäuse 5 eine in Umfangsrichtung wirkende Kraft ausübt. Zudem geht von dieser Schraubenfeder 7 eine Axialkraft auf die der Feder 7 zugeordneten Bodenbereiche der Zylindergehäuse 3 und 5 aus, so dass das untere Zylindergehäuse 3 mit einer Normalkraft gegen den Reibbelag 13 auf der Scheibe 4 gedrückt wird.

Zudem ist vorgesehen, dass in die radial innere Mantelfläche des unteren Zylindergehäuses 3 eine zweiteilige Gleitlagerbuchse 14 eingepresst ist, welche beispielsweise aus Stahl mit einer Gleitbeschichtung aus einer Bronze-PTFE-Matrix besteht. In diese Gleitlagerbuchse 14 ist der hohle Bolzen 2 aufgenommen, dessen äußere Mantelfläche mit der Gleitlagerbuchse 14 eine Reibpaarung bildet.

Wie Figur 4 verdeutlicht, führt die auf die Spannrolle aufgebrachte Kraft zu einer außermittigen Belastung des Gleitlagers (Bolzen 2, Lagerhülse 14). Dadurch kommt es ohne die Maßnahmen gemäß der Erfindung zu einer erhöhten Kantenbelastung der Gleitlagerpartner, welches eine erhöhte Flächenpressung verursacht, mit der Folge, dass die Lebensdauer des Gleitlagers reduziert ist.

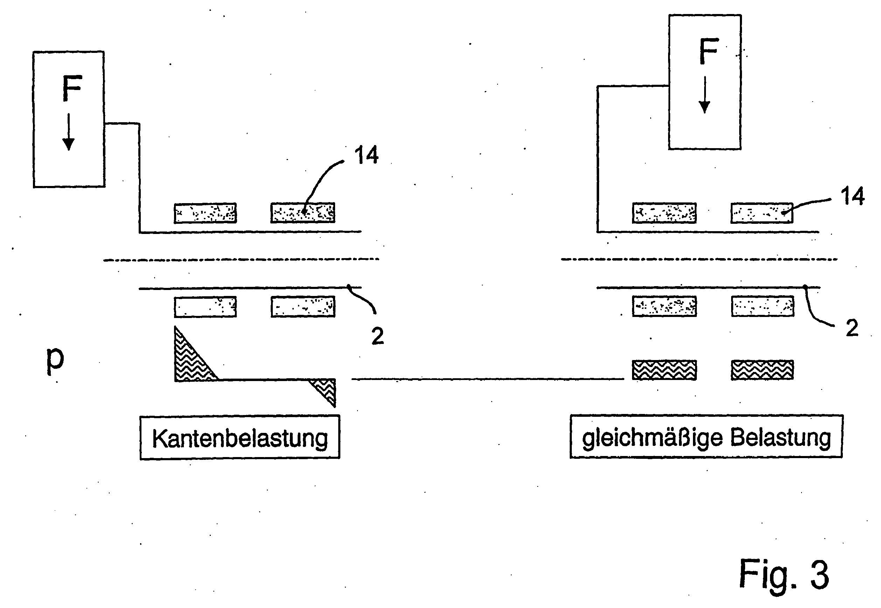

Fig. 3 verdeutlicht schematisch die Verteilung der Flächenpressung p an paarweise verbauten Gleitlagern 14 in einer gattungsgemäßen Spannvorrichtung bei einer zentral angreifenden Kraft F (rechte Bildhälfte) und bei einer außermittig, also seitlich angreifenden Kraft F (linke Bildhälfte). Dadurch ist erkennbar, dass bei einer zentral angreifenden Kraft eine gleichmäßige Belastung bzw. Flächenpressung p zwischen der Lagerhülse 14 und dem Bolzen 2 festzustellen ist, welches hier durch die rechteckigen Kästen mit gewellter Schraffur graphisch verdeutlich ist. Dies ist zur Realisierung eines geringen Lagerverschleißes sehr vorteilhaft.

Demgegenüber kommt es ohne die baulichen Maßnahmen gemäß der Erfindung bei einer seitlich eingeleiteten Kraft F in das Gleitlager der linken Bildhälfte der Figur 3 zu starken Kantenbetastungen bzw. Flächenpressungen p, welche hier durch die dreieckigen Kästen mit gewellter Schraffur graphisch verdeutlicht sind.

Wie der Kräfteverlauf zeigt, ist die Belastung innerhalb des Gleitlagers sehr ungleichmäßig, wobei entgegengesetzte Kräftespitzen zu den Enden des Gleitlagers hin verstärkt ausgebildet sind. In diesem Fall wirken also jeweils an den Enden sehr starke Flächenpressungskräfte, welche in diesen Bereichen zu verstärktem Verschleiß und somit zu einer reduzierten Lebensdauer führen.

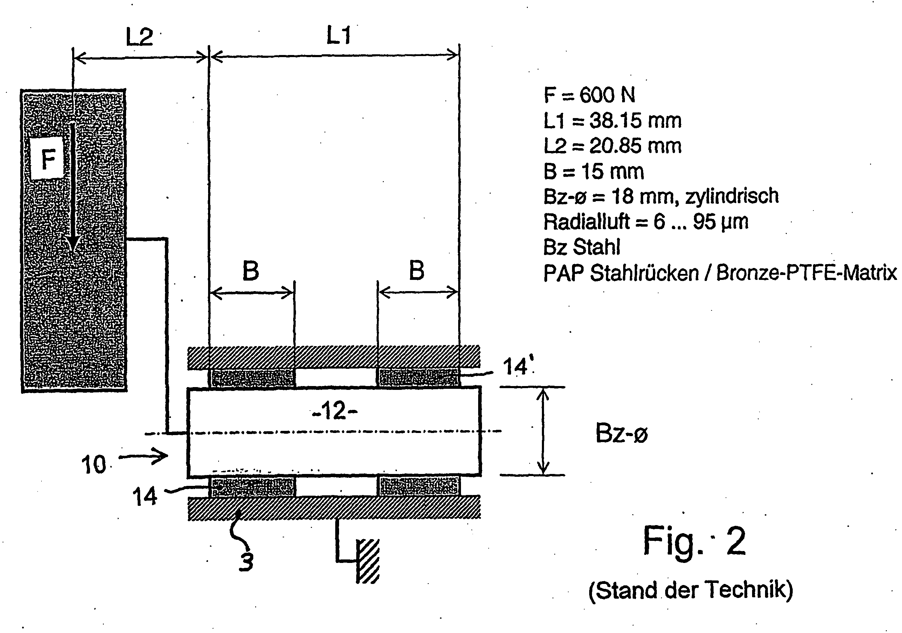

Figur 2 zeigt eine Endprofilierung an einer Bolzen-Lagerhülseneinheit 10 mit außermittig einwirkender Kraft F auf den zylindrischen Bolzen 12 gemäß dem Stand der Technik. Der Bolzen 12 ist hier in zwei Lagerhülsen 14,14' gelagert, welche wiederum in einer Buchse 16 eingepresst sind. Bei diesem Aufbau ist der Kräfteverlauf innerhalb der Buchsen-Lagerhülseneinheit 10 ungleichmäßig verteilt, wobei an den jeweiligen Kanten starke Kräftebelastungen vorherrschen, welche wiederum hohe Verschleißerscheinungen der Bolzen-Lagerhülseneinheit hervorrufen (siehe auch Figur 3, linke Bildhälfte).

Die in der Figur 2 aufgelisteten Angaben bezüglich der Kraft F, der Längen L1, L2 und B, des Durchmessers Bz und der Materialien beziehen sich auf typische Werte im Bereich der Verwendung eines Riemenspannsystems und sind nur zur beispielhaften Erläuterung angegeben.

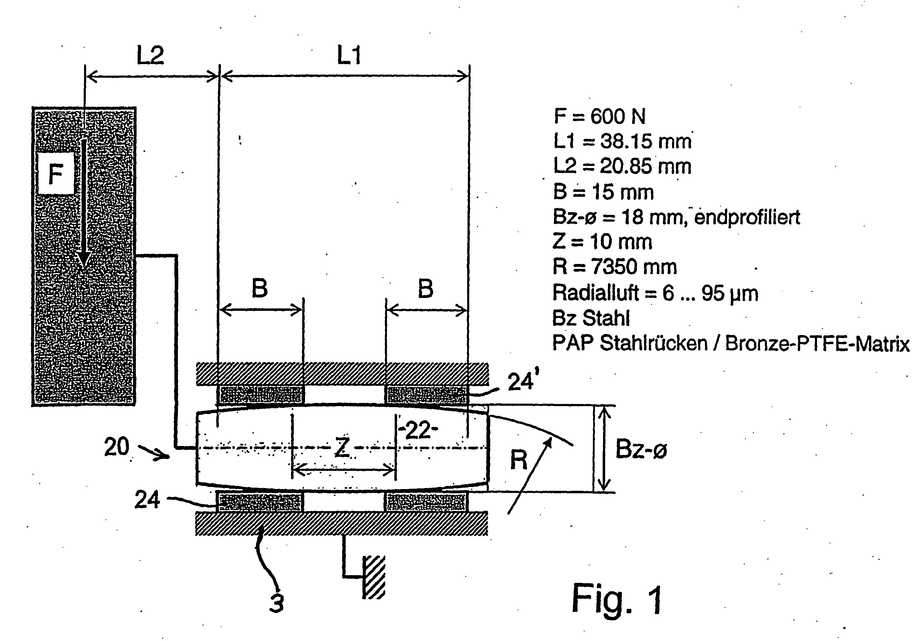

Fig. 1 zeigt eine Endprofilierung einer Bolzen-Lagerhülseneinheit 20 gemäß der vorliegenden Erfindung. Auch hier wirkt eine Kraft F außermittig auf den Bolzen 22. Ebenfalls wird auch hier der Bolzen 22 durch zwei axial hintereinander angeordnete Lagerhülsen 24 und 24' gelagert, welche in einer Bohrung des Gehäuses 3 eingepresst sind. In dieser Ausbildungsform der Erfindung sind die Lagerhülsen 24, 24' zylindrisch ausgebildet, wohingegen der Bolzen 22 von zwei durch einen Abstand Z beabstandeten Positionen aus gesehen jeweils zum axialen Ende hin verlaufend verjüngend (ballig) ausgebildet ist. Die Verjüngung des Bolzens 22 ist dabei radial mit einem Radius R ausgebildet. Das Zentrum des Abstandes Z ist dabei auch gleichzeitig das axiale Zentrum des Bolzens 22.

Durch diese gezielte Endprofilierung wird bei einer außermittigen Krafteinleitung F die Flächenpressung erheblich reduziert, da die Geometrie der Mantelfläche des Bolzens 22 bereits an die sozusagen schiefe Bolzenbelastung angepasst ist. Dadurch wird im Ergebnis die Tragfläche zwischen dem Bolzen 22 und den Lagerhülsen 24, 24' deutlich gegenüber bekannten technischen Lösungen vergrößert, wodurch die Lebensdauer der Bolzen-Lagerhülseneinheit 20 unter Beibehaltung gegenwärtiger Einbauvorschriften erhöht wird. Gleichzeitig werden Einsatzgrenzen der Büchsen-Lagerhülseneinheit 20 erweitert, und zwar unter Beibehaltung der für eine Großserienfertigung notwendigen Toleranzen für den Durchmesser des Bolzens 20 und den Durchmessern der Lagerhülsen 24, 24'.

Auch hier beziehen sich die in der Fig. 1 aufgelisteten Angaben bezüglich der Kraft F, den Maßen und Materialien auf typische Werte im Bereich der Verwendung eines Riemenspannsystems und sind nur zur beispielhaften Erläuterung angegeben.

So wird es in dem konkreten Ausführungsbeispiel der Fig. 1 als vorteilhaft erachtet, wenn bei einer einwirkenden Kraft F von 600 N, einem Abstand L1 von 38,15 mm zwischen den axialen Enden der Lagerhülseneinheit 24 und 24', einer axialen Länge B von 15 mm der jeweiligen Lagerhülsen 24, 24', einer Länge L2 von 20,85 mm zwischen dem axialen Ende der Lagerhülse 24 und dem Einleitungspunkt der Kraft F in den Bolzen 22 und einem Bolzendurchmesser Bz ø von 18 mm die ballige Geometrie der beiden Endbereiche der Bolzenmantelfläche einen Radius R vom 7350 mm aufweist, und die Anfangspunkte (bzw. vorbestimmten Positionen) der mit diesen Radien geschlagenen Kreisbögen eine Strecke Z von 10 mm voneinander entfernt sind. In dem hier beschriebenen Beispiel befinden sich diese Anfangspunkte zudem jeweils 5 mm von der Mitte des Bolzen 22 entfernt.

Der Bolzen selbst besteht aus dem Material Bz = Stahl. Die Gleitlagerbuchse besteht neben Stahl sowie einer Gleitbeschichtung, die aus einer Bronze-PTFE-Matrix hergestellt ist.

### Bezugszeichen

- 1: Riemenspannsystem
- 2: Bolzen
- 3: unteres Zylindergehäuse
- 4: Scheibe
- 5: oberes Zylindergehäuse
- 6: Längsachse
- 7: Schraubenfeder
- 8: Hebel
- 9: Schraube
- 10: Büchsen-Lagerhülseneinheit
- 12: Bolzen
- 13: Reibbelag
- 14,14': Lagerhülse
- 20: Büchsen-Lagerhülseneinheit
- 22: Bolzen
- 24, 24': Lagerhülse
- p: Flächenpressung
- F: Kraft

## Patentansprüche

1. Gleitlageranordnung mit einem Bolzen (22) und mindestens einer Lagerhülse (24, 24') zur Aufnahme des Bolzens (22), wobei der Bolzen (22) eine senkrecht zur Bolzen-Lagerhülseneinheit (20) einwirkende außermittige Kraft (F) aufnimmt, und wobei die mindestens eine Lagerhülse (24, 24') zylindrisch sowie der Bolzen (22) von vorbestimmten Positionen aus jeweils zum axialen Ende hin verlaufend verjüngend ausgebildet ist, **dadurch gekennzeichnet, dass** die der mindestens einen Lagerhülse (24, 24') zugewandte Mantelfläche des Bolzens (22) in Bezug auf dessen Längsachse und symmetrisch zum axialen Mittelpunkt des Bolzens (22) jeweils einem Radius (R) folgend ballig ausgebildet ist.

2. Gleitlageranordnung nach Anspruch 1, **dadurch gekennzeichnet, dass** der Bolzen (22) in zwei Lagerhülsen (24, 24') gelagert ist.

## Claims

1. Slide bearing arrangement having a pin (22) and at least one bearing sleeve (24, 24') for receiving the pin (22), the pin (22) absorbing an eccentric force (F) which acts perpendicularly with respect to the pin/bearing sleeve unit (20), and the at least one bearing sleeve (24, 24') being of cylindrical configuration and also the pin (22) being of tapering configuration in a manner which extends from predefined positions in each case toward the axial end, **characterized in that** the circumferential face of the pin (22) which faces the at least one bearing sleeve (24, 24') is of spherical configuration in relation to its longitudinal axis and symmetrical with respect to the axial centre point of the pin (22), in each case following a radius (R).

2. Slide bearing arrangement according to Claim 1, **characterized in that** the pin (22) is mounted in two bearing sleeves (24, 24').

## Revendications

1. Arrangement de palier lisse comprenant un boulon (22) et au moins une douille-palier (24, 24') pour recevoir le boulon (22), le boulon (22) recevant une force (F) excentrée agissant perpendiculairement à l'unité boulon/douille-palier (20), et l'au moins une douille-palier (24, 24') étant réalisée sous forme cylindrique et le boulon (22) étant réalisé de manière à se rétrécir depuis des positions prédéterminées en s'étendant à chaque fois vers l'extrémité axiale, **caractérisé en ce que** la surface d'enveloppe du boulon (22) tournée vers l'au moins une douille-palier (24, 24') est réalisée sous forme bombée par rapport à son axe longitudinal et symétriquement par rapport au centre axial du boulon (22) en suivant à chaque fois un rayon (R).

2. Arrangement de palier lisse selon la revendication 1, **caractérisé en ce que** le boulon (22) est monté dans deux douilles-paliers (24, 24').
